# EUROPEAN PATENT APPLICATION

(11) **EP 4 266 242 A1**
(43) Date of publication of application: **25.10.2023**
(21) Application number: 20966003.4
(22) Date of filing: 18.12.2020
(51) Int. Cl.: G06T 7/00

(54) **AUTHENTICATION METHOD, INFORMATION PROCESSING DEVICE, AND AUTHENTICATION PROGRAM**

(71) Applicant: FUJITSU LIMITED, Kawasaki-shi, Kanagawa 211-8588 (JP)
(72) Inventor: NADA, Hajime, Kawasaki-shi, Kanagawa 211-8588 (JP); ABE, Narishige, Kawasaki-shi, Kanagawa 211-8588 (JP)
(74) Representative: Hoffmann Eitle
(86) International application number: PCT/JP2020/047409
(87) International publication number: WO 2022/130616

(57) **Abstract**

A computer detects a plurality of biometric region candidates and respective feature points of the plurality of biometric region candidates from a captured image obtained by capturing a living body. The computer selects any one of the plurality of biometric region candidates based on a position of the feature point of each of the plurality of biometric region candidates, and authenticates the living body using an image of the selected biometric region candidate.

## Description

### FIELD

The present disclosure relates to an authentication technology.

### BACKGROUND

Biometric authentication is a technology for identifying a person or searching for a same person using biometric features such as faces, veins, fingerprints, or palm prints. The biometric authentication is used in various fields such as bank automated teller machines (ATMs) or room entry/exit management, and in recent years, the biometric authentication has begun to be used for cashless payments in stores such as supermarkets or convenience stores.

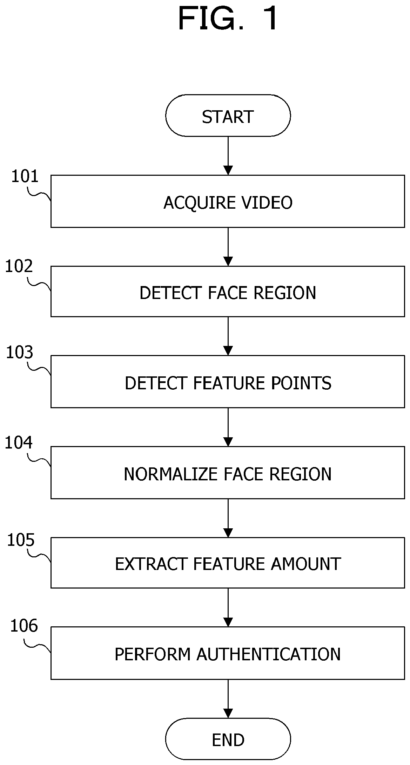

FIG. 1 is a flowchart illustrating an example of face authentication processing using a biometric feature of a face of a person. First, an authentication device acquires a video of a person to be authenticated captured by an imaging device, and extracts an image in which the person to be authenticated is captured from the acquired video (step 101).

Next, the authentication device detects a face region in which the face is captured from the extracted image (step 102), and detects feature points of the face such as eyes, a nose, and a mouth from the detected face region (step 103). The feature point of the face may also be referred to as a landmark.

Next, the authentication device normalizes an image of the face region based on a position of the detected feature point to generate a normalized face image (step 104), and extracts a feature amount of the face from the normalized face image (step 105).

Next, the authentication device compares (collates) the extracted feature amount with a feature amount of a person to be registered who has been registered in advance in a registration template, and authenticates the person to be authenticated based on a comparison result (step 106).

In relation to the face authentication processing, there is known a face recognition system in which users themselves can select a part of a face from which a feature amount is to be extracted (see, for example, Patent Document 1). There is also known a face authentication device capable of suppressing an influence of positional deviation of a detected face feature point and implementing highly accurate face authentication (see, for example, Patent Document 2).

There is also known an image authentication device that authenticates an individual by recalling a stored image from a face image using associative memory, complementing a significant change portion of an image represented by partial concealment of a face such as sunglasses or a mask, and collating the image with a registered image (see, for example, Patent Document 3).

There are also known high-speed object detection using a cascaded classifier, face detection and face alignment using a cascaded convolutional neural network that performs multi-task learning, and face alignment using three-dimensional features (see, for example, Non-Patent Document 1 to Non-Patent Document 3).

### SUMMARY

### TECHNICAL PROBLEM

When the face authentication is performed for the person to be authenticated, the person to be authenticated may wear a wearing object such as a mask, a cap, glasses, or sunglasses, or long bangs of the person to be authenticated may cover a part of eyebrows and eyes. In such a case, since the face authentication is performed using the image in which a part of the face is covered with the wearing object or the bangs, the authentication accuracy is deteriorated.

Note that such a problem occurs not only in the face authentication using a face image but also in biometric authentication using various biometric images.

In one aspect, an object of the present disclosure is to improve authentication accuracy of biometric authentication for detecting a feature point from a biometric image.

### SOLUTION TO PROBLEM

In one idea, a computer detects a plurality of biometric region candidates and respective feature points of the plurality of biometric region candidates from a captured image obtained by capturing a living body. The computer selects any one of the plurality of biometric region candidates based on a position of the feature point of each of the plurality of biometric region candidates, and authenticates the living body using an image of the selected biometric region candidate.

### ADVANTAGEOUS EFFECTS OF INVENTION

According to one aspect, authentication accuracy of biometric authentication for detecting a feature point from a biometric image can be improved.

### BRIEF DESCRIPTION OF DRAWINGS

FIG. 1 is a flowchart of face authentication processing;
FIG. 2 (i.e., FIGs 2A and 2B) is diagrams each illustrating a normally detected face region;
FIG. 3 (FIGs. 3A and 3B) is diagrams each illustrating a face region detected from an image of a person to be authenticated who wears a mask;
FIG. 4 (i.e., FIGs. 4A and 4B) is diagrams each illustrating a face region detected from an image of a person to be authenticated who wears a cap;
FIG. 5 is a functional configuration diagram of an information processing device;
FIG. 6 is a flowchart of biometric authentication processing;
FIG. 7 is a functional configuration diagram of a biometric authentication device;
FIG. 8 is a diagram illustrating partial images generated from an image of a person to be authenticated who wears a mask;
FIG. 9 is a diagram illustrating feature points;
FIG. 10 is a table illustrating an intermediate score and a reproduction degree;
FIG. 11 is a diagram illustrating partial images generated from an image of a person to be authenticated who wears a cap;
FIG. 12 is a flowchart of registration processing performed by the biometric authentication device;
FIG. 13 is a flowchart of face authentication processing performed by the biometric authentication device; and
FIG. 14 is a hardware configuration diagram of the information processing device.

### DESCRIPTION OF EMBODIMENTS

Hereinafter, embodiments will be described in detail with reference to the drawings.

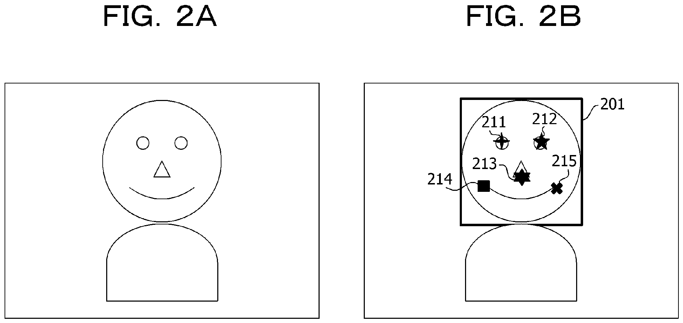

FIG. 2 (i.e., FIGs. 2A and 2B) illustrates examples of a normally detected face region. FIG. 2A illustrates an example of an image of a person to be authenticated whose face is not covered with a wearing object or bangs.

FIG. 2B illustrates an example of a face region and feature points detected from the image of FIG. 2A. A face region 201 includes an entire face of the person to be authenticated. Feature points 211 to 215 are detected from the face region 201. The feature point 211 represents a right eye, the feature point 212 represents a left eye, the feature point 213 represents a nose tip, the feature point 214 represents a right end of a mouth, and the feature point 215 represents a left end of the mouth.

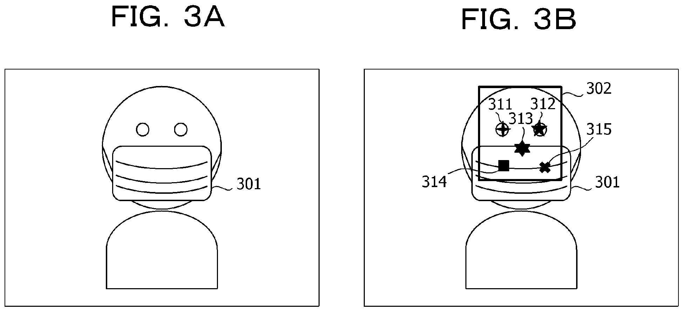

FIG. 3 (i.e., FIGs. 3A and 3B) illustrates examples of a face region detected from an image of the person to be authenticated who wears a mask. FIG. 3A illustrates an example of an image of the person to be authenticated whose face is partially covered with a mask 301.

FIG. 3B illustrates an example of a face region and feature points falsely detected from the image of FIG. 3A. A face region 302 includes a periphery of the eyes of the person to be authenticated and an upper portion of the mask 301, and does not include the entire face. Feature points 311 to 315 are detected from the face region 302. The feature point 311 represents the right eye, the feature point 312 represents the left eye, the feature point 313 represents the nose tip, the feature point 314 represents the right end of the mouth, and the feature point 315 represents the left end of the mouth.

Among the feature points, a position of the feature point 313 corresponds to an upper end of the mask 301 and does not correspond to the nose tip. Furthermore, the positions of the feature points 314 and 315 correspond to lateral lines of the mask 301, and do not correspond to the right end and the left end of the mouth.

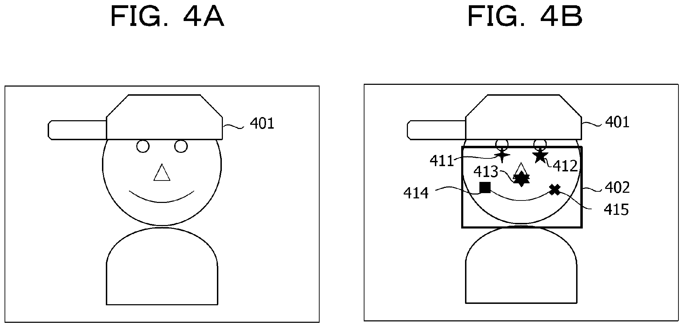

FIG. 4 (i.e., FIGs. 4A and 4B) illustrates examples of a face region detected from an image of the person to be authenticated who wears a cap. FIG. 4A illustrates an example of an image of the person to be authenticated whose face is partially covered with a cap 401.

FIG. 4B illustrates an example of a face region and feature points falsely detected from the image of FIG. 4A. A face region 402 includes a portion below the eyes of the person to be authenticated and does not include the entire face. Feature points 411 to 415 are detected from the face region 402. The feature point 411 represents the right eye, the feature point 412 represents the left eye, the feature point 413 represents the nose tip, the feature point 414 represents the right end of the mouth, and the feature point 415 represents the left end of the mouth.

Among the feature points, the positions of the feature point 411 and the feature point 412 correspond to positions below the right eye and the left eye, and do not correspond to the right eye and the left eye.

When the face authentication is performed using the image of the face region 302 in FIG. 3B or the face region 402 in FIG. 4B, the image is normalized and the feature amounts are extracted based on the incorrect feature points, so that the authentication accuracy deteriorates.

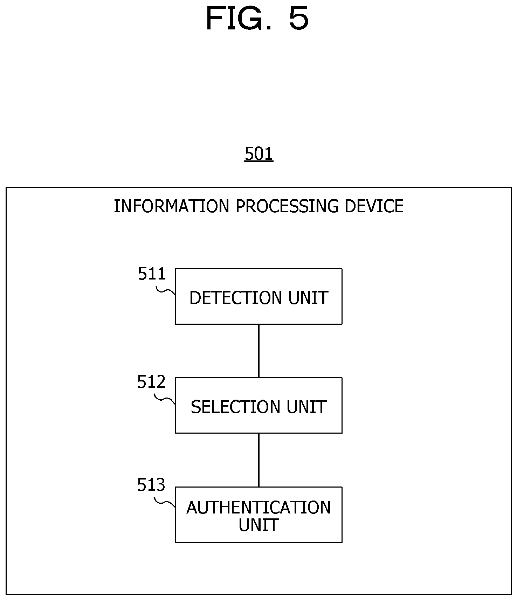

FIG. 5 illustrates a functional configuration example of an information processing device (computer) according to the embodiment. An information processing device 501 in FIG. 5 includes a detection unit 511, a selection unit 512, and an authentication unit 513.

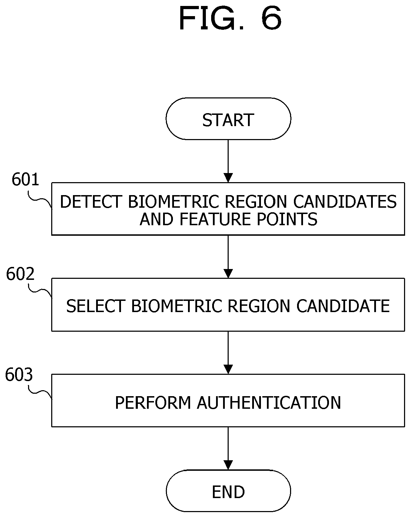

FIG. 6 is a flowchart illustrating an example of biometric authentication processing executed by the information processing device 501 in FIG. 5. First, the detection unit 511 detects a plurality of biometric region candidates and respective feature points of the plurality of biometric region candidates from a captured image obtained by capturing a living body (step 601).

Next, the selection unit 512 selects any biometric region candidate from among the plurality of biometric region candidates based on the position of the feature point of each of the plurality of biometric region candidates (step 602). Then, the authentication unit 513 authenticates the living body, using an image of the selected biometric region candidate (step 603).

According to the information processing device 501 in FIG. 5, the authentication accuracy of the biometric authentication for detecting the feature points from the biometric image can be improved.

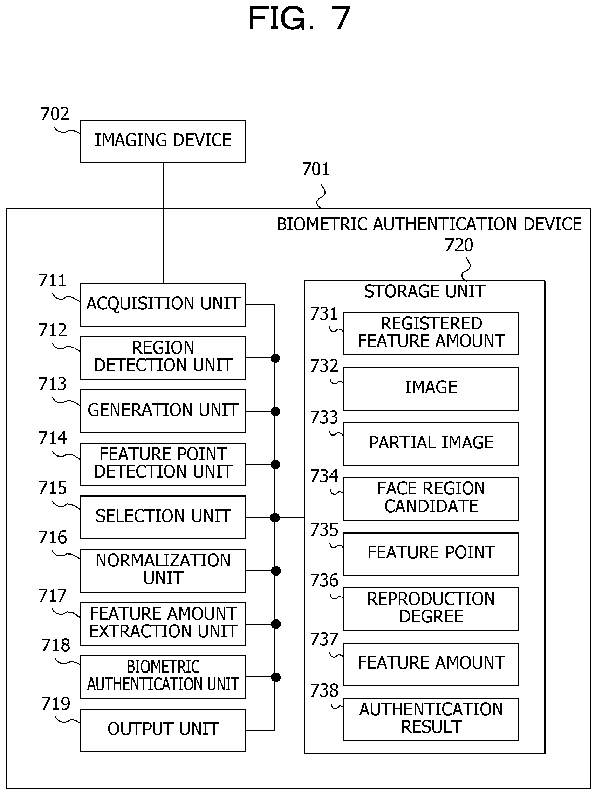

FIG. 7 illustrates a functional configuration example of a biometric authentication device corresponding to the information processing device 501 in FIG. 5. A biometric authentication device 701 in FIG. 7 includes an acquisition unit 711, a region detection unit 712, a generation unit 713, a feature point detection unit 714, a selection unit 715, a normalization unit 716, a feature amount extraction unit 717, a biometric authentication unit 718, an output unit 719, and a storage unit 720. The biometric authentication device 701 performs face authentication for a face of a person in a financial processing system of a financial institution, an entrance/exit management system, a settlement system of a retail store, or the like. The face of a person is an example of the living body.

The region detection unit 712, the generation unit 713, and the feature point detection unit 714 correspond to the detection unit 511 in FIG. 5. The selection unit 715 corresponds to the selection unit 512 in FIG. 5. The normalization unit 716, the feature amount extraction unit 717, and the biometric authentication unit 718 correspond to the authentication unit 513 in FIG. 5.

An imaging device 702 is a camera including an imaging element such as a charge-coupled device (CCD) or a complementary metal-oxide-semiconductor (CMOS), for example.

The storage unit 720 stores a registered feature amount 731 of each of a plurality of persons to be registered. The registered feature amount 731 is a feature amount extracted from the face image of the person to be registered. The registered feature amount 731 is, for example, a histograms of oriented gradients (HOG) feature amount, a scaled invariance feature transform (SIFT) feature amount, or a speeded-up robust features (SURF) feature amount. The registered feature amount 731 may be a binary robust independent elementary features (BRIEF) feature amount, saliency, or a feature amount by a convolutional neural network.

In the face authentication processing for the person to be authenticated, the imaging device 702 captures an image or a video of the person to be authenticated and outputs the image or the video to the biometric authentication device 701. The video of the person to be authenticated includes a plurality of time-series images. Each image included in the video may be referred to as a frame.

The acquisition unit 711 acquires the image or the video of the person to be authenticated from the imaging device 702. In a case where the image of the person to be authenticated is acquired, the acquisition unit 711 stores the acquired image in the storage unit 720 as an image 732. In a case where the video of the person to be authenticated is acquired, the acquisition unit 711 extracts any image included in the acquired video, and stores the extracted image in the storage unit 720 as the image 732. The image 732 is an example of the captured image.

The region detection unit 712 detects a face region from the image 732, and the generation unit 713 expands the detected face region in the image 732 to generate one or a plurality of partial images 733, and stores the partial images in the storage unit 720. Then, the region detection unit 712 detects the face region from each partial image 733, and stores the plurality of face regions detected from the image 732 and each partial image 733 in the storage unit 720 as a plurality of face region candidates 734. The face region candidate 734 is an example of the biometric region candidate.

The region detection unit 712 can detect the face regions from the image 732 and the partial images 733 by, for example, the technology described in Non-Patent Document 1 or 2. Non-Patent Document 1 describes face detection processing using a local feature amount, and Non-Patent Document 2 describes face detection processing using a neural network.

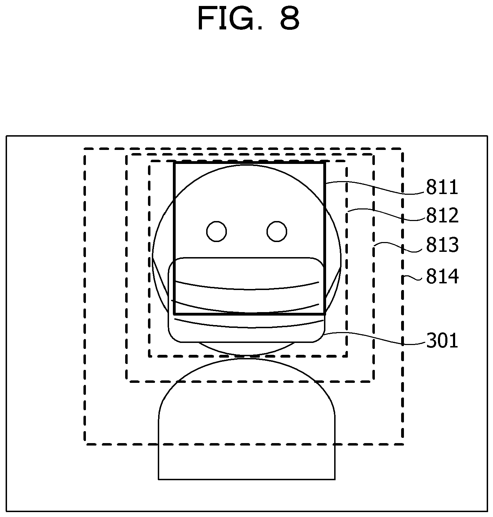

FIG. 8 illustrates an example of partial images generated from the image in FIG. 3A. A face region 811 is detected from the image in FIG. 8, and the face region 811 is expanded in a right direction, a left direction, and a downward direction, so that a partial image 812 to a partial image 814 are generated.

In a case where the person to be authenticated wears the mask 301, a region around an upper side of the face that is not covered with the mask 301, such as the face region 811, is often falsely detected. Therefore, the generation unit 713 expands the face region 811 widely in the downward direction. Thereby, the partial image 812 to the partial image 814 including the entire face can be generated.

The height of the partial image 812 is 1.25 times the height of the face region 811, and the width of the partial image 812 is 1.25 times the width of the face region 811. The height of the partial image 813 is 1.5 times the height of the face region 811, and the width of the partial image 813 is 1.5 times the width of the face region 811. The height of the partial image 814 is twice the height of the face region 811, and the width of the partial image 814 is twice the width of the face region 811.

In a case where the face region is detected from the entire image in FIG. 8, the area of the face in the image becomes relatively small, and thus a sufficient amount of information is not able to be obtained, which may cause false detection. However, in a case where the face region is detected from the partial image 812 to the partial image 814, the area of the face in the image becomes relatively large, and thus the amount of information increases and a possibility of false detection is reduced.

The feature point detection unit 714 detects a plurality of feature points 735 such as the right eye, the left eye, the nose tip, the right end of the mouth, and the left end of the mouth from the image of each face region candidate 734, and stores the plurality of feature points in the storage unit 720. Information of the feature point 735 includes a type of the feature point 735 and a coordinate value that indicates the position of the feature point 735 in the image 732.

The feature point detection unit 714 can detect the feature point 735 from the image of the face region candidate 734 by, for example, the technology described in Non-Patent Document 2 or 3. Non-Patent Document 2 describes a technology for detecting a face region and a feature point by multitask, and Non-Patent Document 3 describes a technology for improving detection accuracy of a feature point using a three-dimensional model.

In the following description, the face region 811 may be described as a face region candidate F1. Furthermore, the face region detected from the partial image 812 may be described as a face region candidate F2, the face region detected from the partial image 813 may be described as a face region candidate F3, and the face region detected from the partial image 814 may be described as a face region candidate F4.

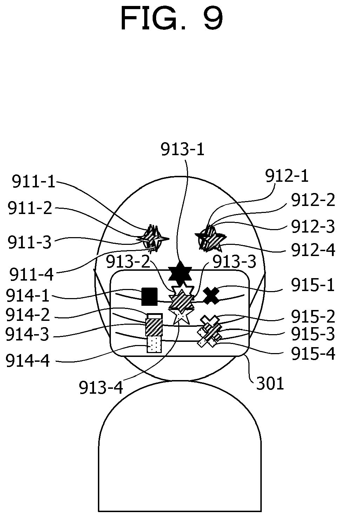

FIG. 9 illustrates an example of the feature points detected from each of the face region candidates F1 to F4. A feature point 911-1, a feature point 912-1, a feature point 913-1, a feature point 914-1, and a feature point 915-1 are feature points detected from the face region candidate F1. A feature point 911-2, a feature point 912-2, a feature point 913-2, a feature point 914-2, and a feature point 915-2 are feature points detected from the face region candidate F2.

A feature point 911-3, a feature point 912-3, a feature point 913-3, a feature point 914-3, and a feature point 915-3 are feature points detected from the face region candidate F3. A feature point 911-4, a feature point 912-4, a feature point 913-4, a feature point 914-4, and a feature point 915-4 are feature points detected from the face region candidate F4.

The feature point 911-i (i = 1 to 4) represents the right eye, the feature point 912-i represents the left eye, the feature point 913-i represents the nose tip, the feature point 914-i represents the right end of the mouth, and the feature point 915-i represents the left end of the mouth.

The selection unit 715 obtains a distance between each feature point 735 detected from each face region candidate 734 and the feature point 735 of the same type detected from another face region candidate 734. Then, the selection unit 715 selects any face region candidate 734 from among the plurality of face region candidates 734 based on the obtained distance.

By obtaining the distance between the feature points 735 of the same type as each other between the two face region candidates 734, it becomes possible to evaluate similarity between the face region candidates 734, and to specify the face region candidate 734 similar to many other face region candidates 734.

For example, the selection unit 715 obtains the number of distances smaller than a predetermined value among the distances obtained for each of a plurality of other face region candidates 734 with respect to each feature point 735 of each face region candidate 734 as an intermediate score. Then, the selection unit 715 obtains a sum of the intermediate scores of the plurality of feature points 735 of each face region candidate 734 as a reproduction degree 736 and stores the same in the storage unit 720. The reproduction degree 736 of each face region candidate 734 indicates a level of face reproducibility by the positions of the feature points 735 detected from the face region candidate 734.

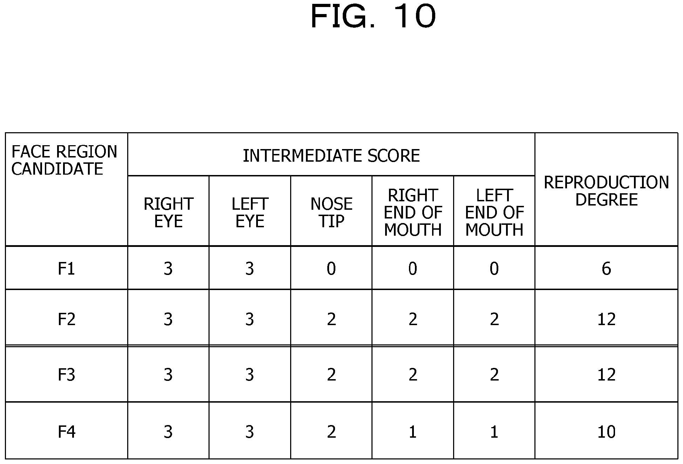

FIG. 10 illustrates an example of the intermediate scores and the reproduction degree of each of the face region candidates F1 to F4 obtained from the feature points in FIG. 9.

For example, the feature points 911-1 to 911-4 represent the right eyes, the feature point 911-1 is detected from the face region candidate F1, and the feature points 911-2 to 911-4 are detected from the other face region candidates than the face region candidate F1. Since every distance between the feature point 911-1 and another feature point 911-i (i = 2 to 4) is smaller than a predetermined value, the intermediate score of the right eye for the face region candidate F1 is 3.

The feature points 913-1 to 913-4 represent the nose tips, the feature point 913-1 is detected from the face region candidate F1, and the feature points 913-2 to 913-4 are detected from the other face region candidates than the face region candidate F1. Since every distance between the feature point 913-1 and another feature point 913-i (i = 2 to 4) is equal to or greater than a predetermined value, the intermediate score of the nose tip for the face region candidate F1 is 0.

The feature point 913-2 is detected from the face region candidate F2, and the feature point 913-1, the feature point 913-3, and the feature point 913-4 are detected from the other face region candidates than the face region candidate F2.

Among the distances between the feature point 913-2 and the another feature point 913-i (i = 1, 3, and 4), the distance between the feature point 913-2 and the feature point 913-3 and the distance between the feature point 913-2 and the feature point 913-4 are smaller than a predetermined value. Meanwhile, the distance between the feature point 913-2 and the feature point 913-1 is equal to or greater than the predetermined value. Therefore, the intermediate score of the nose tip for the face region candidate F2 is 2.

The feature points 914-1 to 914-4 represent the right ends of the mouths, the feature point 914-4 is detected from the face region candidate F4, and the feature point 914-1 to the feature point 914-3 are detected from the other face region candidates than the face region candidate F4.

Among the distances between the feature point 914-4 and another feature point 914-i (i = 1 to 3), the distance between the feature point 914-4 and the feature point 914-3 is smaller than a predetermined value. Meanwhile, the distance between the feature point 914-4 and the feature point 914-1 and the distance between the feature point 914-4 and the feature point 914-2 are equal to or greater the predetermined value. Therefore, the intermediate score of the right end of the mouth for the face region candidate F4 is 1.

Other intermediate scores in FIG. 10 are obtained in a similar manner. The reproduction degree 736 of each face region candidate is the sum of the respective intermediate scores of the right eye, the left eye, the nose tip, the right end of the mouth, and the left end of the mouth. The reproduction degree 736 of the face region candidate F1 is 6, the reproduction degrees 736 of the face region candidate F2 and the face region candidate F3 are 12, and the reproduction degree 736 of the face region candidate F4 is 10.

In a case where the reproduction degree 736 of any face region candidate 734 is larger than a predetermined threshold, the positions of the feature points 735 detected from the face region candidate 734 are similar to the positions of the feature points 735 detected from the plurality of other face region candidates 734. Therefore, the face reproducibility by the positions of the feature points 735 detected from the face region candidate 734 is high, and it can be determined that the face region is accurately detected.

Therefore, the selection unit 715 compares the reproduction degree 736 of each face region candidate 734 with a threshold, and selects the face region candidate 734 having a maximum reproduction degree 736 among the face region candidates 734 having the reproduction degrees 736 larger than the threshold as a face authentication region.

In a case where there are two or more face region candidates 734 having the maximum reproduction degree 736, the selection unit 715 selects the face region candidate 734 having a maximum area among the face region candidates 734 as the face authentication region.

For example, in a case where the threshold of the reproduction degree 736 is 8, the reproduction degrees 736 of the face region candidate F2 to the face region candidate F4 in FIG. 10 are larger than the threshold, and the face region candidate F2 and the face region candidate F3 have the maximum reproduction degree 736. In this case, out of the face region candidate F2 and the face region candidate F3, the face region candidate having the maximum area is selected as the face authentication region.

In a case where the reproduction degrees 736 of all the face region candidates 734 are equal to or less than the threshold, detection results of each face region candidate 734 and each feature point 735 are not stable, and there is a high possibility that many false detections are included. Many of the falsely detected face region candidates 734 correspond to a part of the face region, and as the area of the face region candidate 734 increases, the face region candidate 734 approaches the entire face region. Therefore, it can be said that the possibility of false detection is lower as the area of the face region candidate 734 is larger.

Therefore, the selection unit 715 selects the face region candidate 734 having the maximum area among all the face region candidates 734 as the face authentication region. Thereby, the face region candidate 734 less affected by false detection can be selected.

The condition that the reproduction degree 736 is larger than the threshold is an example of a predetermined condition. The case where the reproduction degrees 736 of all the face region candidates 734 are equal to or less than the threshold is an example of a case where the number of distances smaller than the predetermined value does not satisfy the predetermined condition.

Note that, in a case where the person to be authenticated does not wear the mask 301, there is a high possibility that the face region candidate 734 detected from the image 732 is selected as the face authentication region. Therefore, the face region candidate 734 suitable for the face authentication is selected regardless of whether the person to be authenticated wears the mask 301.

The normalization unit 716 generates a normalized face image by normalizing the image of the face authentication region with respect to the position of each feature point 735 included in the selected face authentication region. For example, the normalization unit 716 can generate the normalized face image by performing alignment such that the position of each feature point 735 becomes a predetermined position and performing projective transformation such that the face faces forward. The feature amount extraction unit 717 extracts a feature amount 737 of the face from the normalized face image and stores the feature amount in the storage unit 720.

The biometric authentication unit 718 compares the feature amount 737 with the registered feature amount 731 of each person to be registered, and authenticates the person to be authenticated based on a comparison result. For example, the biometric authentication unit 718 calculates similarity between the feature amount 737 and the registered feature amount 731 of each person to be registered, and compares the calculated similarity with a predetermined threshold. The biometric authentication unit 718 determines that the authentication has been successful in a case where the similarity is larger than the threshold, and determines that the authentication has failed in a case where the similarity is equal to or smaller than the threshold.

Then, the biometric authentication unit 718 generates an authentication result 738 and stores the same in the storage unit 720. The authentication result 738 indicates success or failure of authentication using the registered feature amount 731 of each person to be registered. The output unit 719 outputs the authentication result 738.

In a case where the video of the person to be authenticated is acquired, the biometric authentication unit 718 may perform authentication for each time-series image included in the video. In this case, the biometric authentication unit 718 can determine that the authentication of the person to be authenticated has been successful in a case where the authentication for any image within a predetermined period has been successful.

According to such face authentication processing, even in a case where the face region is falsely detected due to an influence of the mask 301, it is possible to correct the detection result and specify the correct face region and feature points. By normalizing the image and extracting the feature amount based on the correct face region and feature points, authentication accuracy of the face authentication is improved.

Next, registration processing of registering the registered feature amount 731 in the storage unit 720 will be described. In the registration processing, the imaging device 702 captures an image of the person to be registered and outputs the image to the biometric authentication device 701.

The acquisition unit 711 acquires the image of the person to be registered from the imaging device 702, and the region detection unit 712 detects the face region from the acquired image. The generation unit 713 expands the detected face region in the acquired image to generate one or a plurality of partial images, and the region detection unit 712 detects the face region from each partial image. The partial image is generated similarly to the partial image in the face authentication processing. The face regions detected from the acquired image and each partial image is used as face region candidates.

The feature point detection unit 714 detects a plurality of feature points such as the right eye, the left eye, the nose tip, the right end of the mouth, and the left end of the mouth from the image of each face region candidate. Similarly to the face authentication processing, the selection unit 715 selects any face region candidate as a registration region from among the plurality of face region candidates.

The normalization unit 716 generates a normalized face image by normalizing the image of the registration region with respect to the position of each feature point included in the selected registration region. The feature amount extraction unit 717 extracts the feature amount of the face from the normalized face image, and registers the extracted feature amount in the storage unit 720 as the registered feature amount 731.

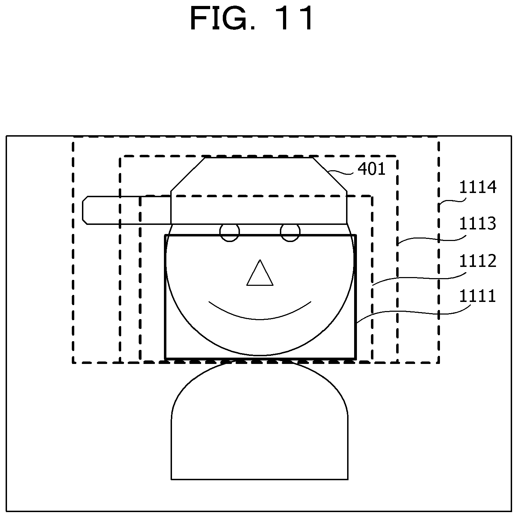

FIG. 11 illustrates an example of the partial images generated from the image in FIG. 4A. A face region 1111 is detected from the image in FIG. 11, and the face region 1111 is expanded in the right direction, the left direction, and an upward direction, so that a partial image 1112 to a partial image 1114 are generated.

In a case where the person to be authenticated wears the cap 401, only a lower-side region of the face that is not covered with the cap 401, such as the face region 1111, is often falsely detected. Therefore, the generation unit 713 expands the face region 1111 widely in the upward direction. Thereby, the partial image 1112 to the partial image 1114 including the entire face can be generated.

The height of the partial image 1112 is 1.25 times the height of the face region 1111, and the width of the partial image 1112 is 1.25 times the width of the face region 1111. The height of the partial image 1113 is 1.5 times the height of the face region 1111, and the width of the partial image 1113 is 1.5 times the width of the face region 1111. The height of the partial image 1114 is twice the height of the face region 1111, and the width of the partial image 1114 is twice the width of the face region 1111.

In a case where the face region is detected from the entire image in FIG. 11, the area of the face in the image becomes relatively small, and thus a sufficient amount of information is not able to be obtained, which may cause false detection. However, in a case where the face region is detected from the partial image 1112 to the partial image 1114, the area of the face in the image becomes relatively large, and thus the amount of information increases and the possibility of false detection is reduced. Even in a case where a part of the face of the person to be authenticated is covered with bangs, use of partial images similar to those in FIG. 11 is effective.

According to such face authentication processing using the partial images, even in a case where the face region is falsely detected due to an influence of the cap 401, it is possible to correct the detection result and specify the correct face region and feature points. By normalizing the image and extracting the feature amount based on the correct face region and feature points, authentication accuracy of the face authentication is improved.

Note that a portion of the face of the person to be authenticated covered with the wearing object or the bangs changes according to a use scene of the biometric authentication device 701 and the person to be authenticated. Therefore, the biometric authentication device 701 may generate a plurality of partial images expanded in the downward direction as illustrated in FIG. 8 and a plurality of partial images expanded in the downward direction as illustrated in FIG. 11, and use the face region detected from each partial image as the face region candidate.

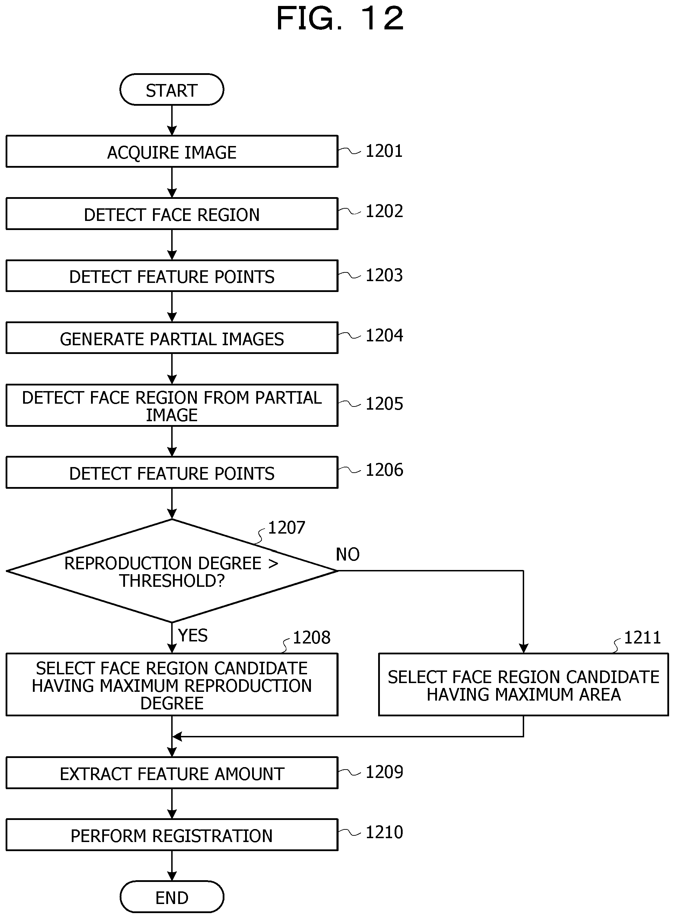

FIG. 12 is a flowchart illustrating an example of the registration processing performed by the biometric authentication device 701 in FIG. 7. First, the acquisition unit 711 acquires the image of the person to be registered from the imaging device 702 (step 1201).

Next, the region detection unit 712 detects the face region from the acquired image (step 1202), and the feature point detection unit 714 detects the plurality of feature points from the image of the face region (step 1203).

Next, the generation unit 713 generates one or a plurality of partial images from the detected face region in the acquired image (step 1204). Then, the region detection unit 712 detects the face region from each partial image (step 1205), and the feature point detection unit 714 detects the plurality of feature points from the image of the face region (step 1206). The plurality of face regions detected from the acquired image and each partial image is used as the plurality of face region candidates.

Next, the selection unit 715 obtains the intermediate score of each feature point of each face region candidate, and obtains the sum of the intermediate scores of the plurality of feature points of each face region candidate as the reproduction degree. Then, the selection unit 715 compares the reproduction degree with the threshold (step 1207).

In a case where the reproduction degree of any face region candidate is larger than the threshold (step 1207, YES), the selection unit 715 selects the face region candidate having the maximum reproduction degree as the registration region (step 1208). Then, the normalization unit 716 generates the normalized face image by normalizing the image of the selected registration region.

Meanwhile, in a case where the reproduction degrees of all the face region candidates are equal to or less than the threshold (step 1207, NO), the selection unit 715 selects the face region candidate having the maximum area as the registration region (step 1211). Then, the normalization unit 716 generates the normalized face image by normalizing the image of the selected registration region.

Next, the feature amount extraction unit 717 extracts the feature amount of the face from the normalized face image (step 1209), and registers the extracted feature amount in the storage unit 720 as the registered feature amount 731 (step 1210).

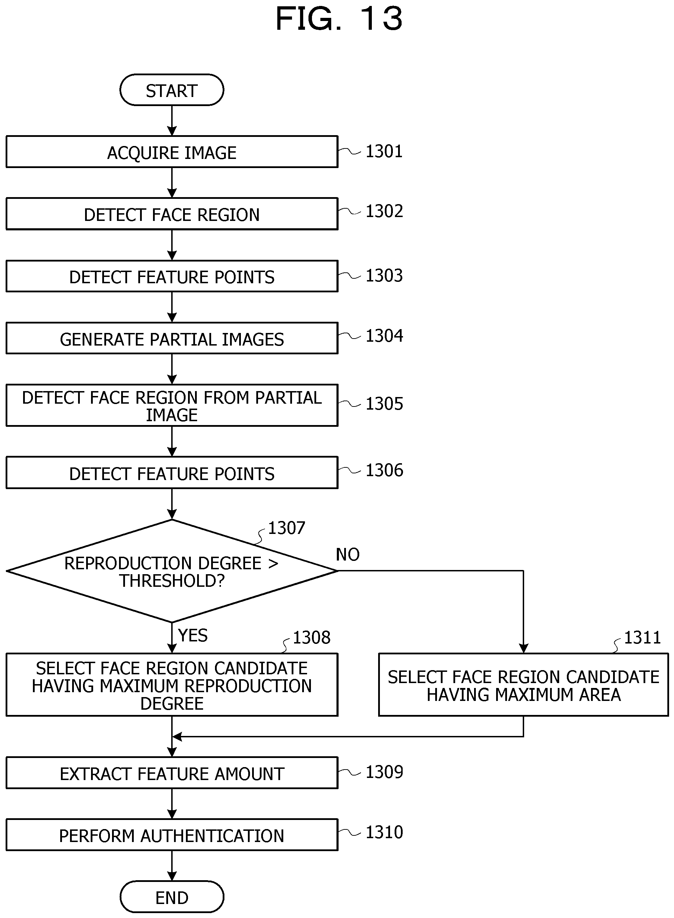

FIG. 13 is a flowchart illustrating an example of the face authentication processing performed by the biometric authentication device 701 in FIG. 7. First, the acquisition unit 711 acquires the image 732 of the person to be authenticated from the imaging device 702 (step 1301). In a case where the video of the person to be authenticated is acquired from the imaging device 702, the acquisition unit 711 extracts the image 732 from the video.

Next, the region detection unit 712 detects the face region from the image 732 (step 1302), and the feature point detection unit 714 detects the plurality of feature points 735 from the image of the face region (step 1303).

Next, the generation unit 713 generates one or a plurality of partial images 733 from the detected face region in the acquired image 732 (step 1304). Then, the region detection unit 712 detects the face region from each partial image 733 (step 1305), and the feature point detection unit 714 detects the plurality of feature points 735 from the image of the face region (step 1306). The plurality of face regions detected from the image 732 and each partial image 733 are used as the plurality of face region candidates 734.

Next, the selection unit 715 obtains the intermediate score of each feature point 735 of each face region candidate 734, and obtains the sum of the intermediate scores of the plurality of feature points 735 of each face region candidate 734 as the reproduction degree 736. Then, the selection unit 715 compares the reproduction degree 736 with the threshold (step 1307).

In a case where the reproduction degree 736 of any face region candidate 734 is larger than the threshold (step 1307, YES), the selection unit 715 selects the face region candidate 734 having the maximum reproduction degree 736 as the face authentication region (step 1308). Then, the normalization unit 716 generates a normalized face image by normalizing the image of the selected face authentication region.

Meanwhile, in a case where the reproduction degrees 736 of all the face region candidates 734 are equal to or less than the threshold (step 1307, NO), the selection unit 715 selects the face region candidate 734 having the maximum area as the face authentication region (step 1311). Then, the normalization unit 716 generates a normalized face image by normalizing the image of the selected face authentication region.

Next, the feature amount extraction unit 717 extracts the feature amount 737 of the face from the normalized face image (step 1309), and the biometric authentication unit 718 performs authentication for the person to be authenticated using the extracted feature amount 737 (step 1310). Then, the output unit 719 outputs the authentication result 738.

The biometric authentication device 701 can also perform the biometric authentication processing using an image of a vein, a fingerprint, a palm print, or the like instead of the image of the face of a person. In a case where the person wears a wearing object such as a glove or an accessory, an image in which a hand or a finger is partially covered with the wearing object may be captured.

Even in a case where the biometric region of the hand or the finger is falsely detected due to the influence of such a wearing object, it is possible to specify the correct biometric region and feature points by expanding the biometric region and generating the partial images. By normalizing the image and extracting the feature amounts based on the correct biometric region and feature points, the authentication accuracy of the biometric authentication is improved.

The configuration of the information processing device 501 in FIG. 5 is merely an example, and some configuration elements may be omitted or changed according to an application or a condition of the information processing device 501.

The configuration of the biometric authentication device 701 in FIG. 7 is merely an example, and some configuration elements may be omitted or changed according to an application or a condition of the biometric authentication device 701. For example, the registered feature amount 731 may be stored in a database outside the biometric authentication device 701. In this case, the biometric authentication device 701 acquires the registered feature amount 731 from the external database and stores the registered feature amount in the storage unit 720.

The flowchart in FIG. 1 is merely an example, and some processing may be omitted or changed according to an application or a condition of the authentication device. The flowcharts in FIGs. 6, 12, and 13 are merely examples, and some processing may be omitted or changed according to the configuration or conditions of the information processing device 501 or the biometric authentication device 701.

The images and the face regions illustrated in FIGs. 2, 3, and 4 are merely examples, and the images and the face regions change according to the person to be authenticated. The partial images illustrated in FIGs. 8 and 11 are merely examples, and other partial images may be used.

The feature points illustrated in FIG. 9 are merely examples, and positions of the feature points change according to the partial image. The intermediate scores and the reproduction degrees illustrated in FIG. 10 are merely examples, and the intermediate scores and the reproduction degrees change according to the positions of the feature points.

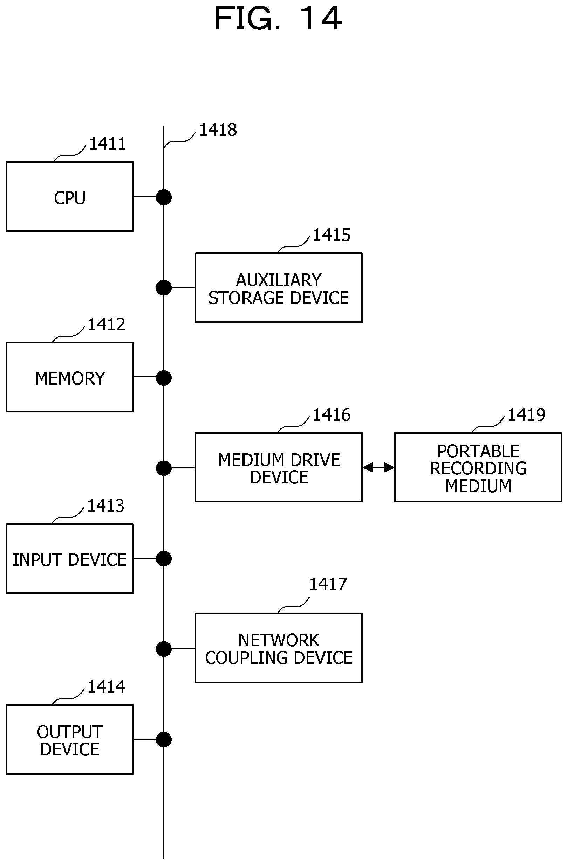

FIG. 14 illustrates a hardware configuration example of an information processing device used as the information processing device 501 in FIG. 5 and the biometric authentication device 701 in FIG. 7. The information processing device in FIG. 14 includes a central processing unit (CPU) 1401, a memory 1402, an input device 1403, an output device 1404, an auxiliary storage device 1405, a medium drive device 1406, and a network coupling device 1407. These configuration elements are hardware and are coupled to each other by a bus 1408.

The memory 1402 is, for example, a semiconductor memory such as a read only memory (ROM), a random access memory (RAM), or a flash memory, and stores programs and data to be used for the processing. The memory 1402 may operate as the storage unit 720 in FIG. 7.

The CPU 1401 (processor) operates as the detection unit 511, the selection unit 512, and the authentication unit 513 in FIG. 5 by executing, for example, a program using the memory 1402. The CPU 1401 operates as the acquisition unit 711, the region detection unit 712, the generation unit 713, the feature point detection unit 714, the selection unit 715, the normalization unit 716, the feature amount extraction unit 717, and the biometric authentication unit 718 in FIG. 7 by executing a program using the memory 1402.

For example, the input device 1403 is a keyboard, a pointing device, or the like and is used for inputting instructions or information from a user or an operator. The output device 1404 is, for example, a display device, a printer, a speaker, or the like, and is used for making an inquiry to the user or the operator or outputting a processing result. The processing result may be the authentication result 738. The output device 1404 may operate as the output unit 719 in FIG. 7.

The auxiliary storage device 1405 is, for example, a magnetic disk device, an optical disk device, a magneto-optical disk device, a tape device, or the like. The auxiliary storage device 1405 may be a flash memory or a hard disk drive. The information processing device can store programs and data in the auxiliary storage device 1405 and load these programs and data into the memory 1402 to use. The auxiliary storage device 1405 may operate as the storage unit 720 in FIG. 7.

The medium drive device 1406 drives a portable recording medium 1409 and accesses recorded content of the portable recording medium 1409. The portable recording medium 1409 is a memory device, a flexible disk, an optical disk, a magneto-optical disk, or the like. The portable recording medium 1409 may be a compact disk read only memory (CD-ROM), a digital versatile disk (DVD), a universal serial bus (USB) memory, or the like. The user or the operator can store programs and data in this portable recording medium 1409 and load these programs and data into the memory 1402 to use.

As described above, a computer-readable recording medium in which the programs and data used for processing are stored is a physical (nontransitory) recording medium such as the memory 1402, the auxiliary storage device 1405, or the portable recording medium 1409.

The network coupling device 1407 is a communication interface circuit that is coupled to a communication network such as a local area network (LAN) and a wide area network (WAN), and that performs data conversion pertaining to communication. The information processing device can receive programs and data from an external device via the network coupling device 1407 and load these programs and data into the memory 1402 to use. The network coupling device 1407 may operate as the output unit 719 in FIG. 7.

Note that the information processing device does not need to include all the configuration elements in FIG. 14, and some configuration elements can be omitted according to an application or a condition. For example, when an interface with the user or the operator is not needed, the input device 1403 and the output device 1404 may be omitted. In a case where the information processing device does not use the portable recording medium 1409 or the communication network, the medium drive device 1406 or the network coupling device 1407 may be omitted.

While the disclosed embodiment and the advantages thereof have been described in detail, those skilled in the art will be able to make various modifications, additions, and omissions without departing from the scope of the present invention as explicitly set forth in the claims.

### CITATION LIST

### PATENT DOCUMENT

Patent Document 1: International Publication Pamphlet No. WO 2007/108225
Patent Document 2: International Publication Pamphlet No. WO 2019/003973
Patent Document 3: Japanese Laid-open Patent Publication No. 2007-148872

### REFERENCE SIGNS LIST

- 10: MANUFACTURING LINE MODEL STORAGE UNIT
- 20: MANUFACTURING MASTER STORAGE UNIT
- 30: INPUT ORDER STORAGE UNIT
- 40: CALCULATION RESULT STORAGE UNIT
- 50: ACQUISITION UNIT
- 60: OPTIMIZATION EXECUTION UNIT
- 70: COUNT UNIT
- 80: SPECIFICATION UNIT
- 90: RESULT OUTPUT UNIT
- 103: STORAGE DEVICE
- 104: INPUT DEVICE
- 105: DISPLAY DEVICE

## Claims

1. An authentication method implemented by a computer, the method comprising:
detecting a plurality of biometric region candidates and a feature point of each of the plurality of biometric region candidates from a captured image obtained by capturing a living body;
selecting any biometric region candidate from among the plurality of biometric region candidates based on a position of the feature point of each of the plurality of biometric region candidates; and
authenticating the living body, using an image of the any biometric region candidate.

2. The authentication method according to claim 1, wherein the selecting of any biometric region candidate includes selecting any biometric region candidate based on a distance between the feature point of each of the plurality of biometric region candidates and the feature point of another biometric region candidate among the plurality of biometric region candidates.

3. The authentication method according to claim 2, wherein the selecting of any biometric region candidate includes:
obtaining the distance for each of a plurality of other biometric region candidates that include the another biometric region candidate,
obtaining a number of distances smaller than a predetermined value among the distances respectively obtained for the plurality of other biometric region candidates, and
selecting the any biometric region candidate based on the number of distances smaller than a predetermined value, each of the distances having been obtained for each of the plurality of biometric region candidates.

4. The authentication method according to claim 3, wherein the selecting of the any biometric region candidate based on the number of distances smaller than a predetermined value includes selecting a biometric region candidate that has a maximum area among the plurality of biometric region candidates as the any biometric region candidate in a case where the number of distances smaller than the predetermined value does not satisfy a predetermined condition.

5. The authentication method according to any one of claims 1 to 4, wherein the detecting of the plurality of biometric region candidates and the feature point of each of the plurality of biometric region candidates includes:
detecting a first biometric region candidate among the plurality of biometric region candidates from the captured image,
generating one or a plurality of partial images by expanding the first biometric region candidate in the captured image, and
detecting a second biometric region candidate among the plurality of biometric region candidates from each of the one or plurality of partial images.

6. The authentication method according to any one of claims 1 to 5, wherein the living body is a face of a person, the plurality of biometric region candidates is a plurality of face region candidates, and the feature point of each of the plurality of biometric region candidates represents an eye, a nose, or a mouth.

7. An information processing apparatus comprising:
a plurality of biometric region candidates and a feature point of each of the plurality of biometric region candidates from a captured image obtained by capturing a living body;
a selection unit of selecting any biometric region candidate from among the plurality of biometric region candidates based on a position of the feature point of each of the plurality of biometric region candidates; and
an authentication unit of authenticating the living body, using an image of the any biometric region candidate.

8. The information processing apparatus according to claim 7, wherein the selection unit selects any biometric region candidate based on a distance between the feature point of each of the plurality of biometric region candidates and the feature point of another biometric region candidate among the plurality of biometric region candidates.

9. The information processing apparatus according to claim 8, wherein the selection unit obtains the distance for each of a plurality of other biometric region candidates that include the another biometric region candidate, obtains a number of distances smaller than a predetermined value among the distances respectively obtained for the plurality of other biometric region candidates, and selects the any biometric region candidate based on the number of distances smaller than a predetermined value, each of the distances having been obtained for each of the plurality of biometric region candidates.

10. The information processing apparatus according to claim 9, wherein the selection unit selects a biometric region candidate that has a maximum area among the plurality of biometric region candidates as the any biometric region candidate in a case where the number of distances smaller than the predetermined value does not satisfy a predetermined condition.

11. An authentication program for causing a computer to execute processing comprising:
detecting a plurality of biometric region candidates and a feature point of each of the plurality of biometric region candidates from a captured image obtained by capturing a living body;
selecting any biometric region candidate from among the plurality of biometric region candidates based on a position of the feature point of each of the plurality of biometric region candidates; and
authenticating the living body, using an image of the any biometric region candidate.

12. The authentication program according to claim 11, wherein the selecting of the any biometric region candidate includes selecting any biometric region candidate based on a distance between the feature point of each of the plurality of biometric region candidates and the feature point of another biometric region candidate among the plurality of biometric region candidates.

13. The authentication program according to claim 12, wherein the selecting of the any biometric region candidate based on the distance includes:
obtaining the distance for each of a plurality of other biometric region candidates that include the another biometric region candidate,
obtaining a number of distances smaller than a predetermined value among the distances respectively obtained for the plurality of other biometric region candidates, and
selecting the any biometric region candidate based on the number of distances smaller than a predetermined value, each of the distances having been obtained for each of the plurality of biometric region candidates.

14. The authentication program according to claim 13, wherein the selecting of the any biometric region candidate based on the number of distances smaller than a predetermined value includes selecting a biometric region candidate that has a maximum area among the plurality of biometric region candidates as the any biometric region candidate in a case where the number of distances smaller than the predetermined value does not satisfy a predetermined condition.
